Europäisches Patentamt

European Patent Office

Office européen des brevets

(11) Veröffentlichungsnummer: **0 477 733 A2**

(12) **EUROPÄISCHE PATENTANMELDUNG**

(21) Anmeldenummer: **91115771.7**

(22) Anmeldetag: **17.09.91**

(51) Int. Cl.⁵: **G06F 15/80**

(30) Priorität: **28.09.90 US 590269**

(43) Veröffentlichungstag der Anmeldung:
**01.04.92 Patentblatt 92/14**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Hanson, Stephen J.**
**28 Cranbury Road**
**Princeton Junction, NJ 08550(US)**

(54) **Zellteilungsnetzwerke zur Inplementierung lernender Netzwerkkonfigurationen.**

㊗ Das vorliegende Verfahren ist eine Integration von Darstellungsaspekten, welche sensitiv für die Netzwerk-prädiktion sind und gleichzeitig die Architekturressourcen des Netzwerks steuern. Folglich ist es mit Zellteilungs-netzwerken möglich, die Netzwerkkomplexität und damit indirekt seine Lerneffizienz und seine Fähigkeit zur Verallgemeinerung dynamisch und opportunistisch zu steuern. Zellteilungsnetzwerke sind definiert mit Hilfe lokaler Rauschinjektionen und Rauschverbundener Lernregeln. Mit fortschreitendem Lernen mißt das Zelltei-lungsnetzwerk die Prädiktionshistorie bestimmter Knoten und kann den Knoten, falls dieser für unzureichend befunden wird, opportunistisch aufspalten und dadurch die Ressourcen des Netzwerks steigern.

FIG. 2

MEIOSIS

Diese Erfindung betrifft lernende Systeme im allgemeinen und speziell ein lernendes System, welches von Zellteilungsnetzwerken (meiosis networks) Gebrauch macht, um die Netzwerkkomplexität zu reduzieren und um weiterhin die Effizienz des Lernvorgangs des Netzwerks zu verbessern.

Hintergrund zur Erfindung

Suchprobleme mit hoher Dimensionalität, a-priori Zwangsbedingungen und Nicht-Linearitäten sind sehr schwer zu implementieren. Unglücklicherweise haben Lernprobleme in biologischen Systemen im allgemeinen die oben erwähnten Eigenschaften. Erschwerend kommt hinzu, daß diejenigen Probleme, welchen sich Organismen der realen Welt gegenübersehen, üblicherweise nicht durch Begriffe wie einfache Mittelung, Optimalität, Lineare Approximation oder vollständiges Wissen von Daten oder über die Natur des zu lösenden Problems charakterisiert werden können. Aus diesem Grunde gibt es aus der Sicht der oben erwähnten Probleme in biologischen Systemen drei grundlegende Eigenschaften realer Lernverfahren, welche sich im Ergebnis in nicht wohldefinierten Problemen und einer heterogenen Menge von Lösungen auswirken.

1. Daten sind kontinuierlich verfügbar, aber unvollständig; das lernende System muß Parameterschätzungen ständig aktualisieren mit unvollständigen Datenbits, welche darüber hinaus unter Umständen eine sehr kleine Stichprobe einer möglichen Gesamtheit repräsentieren.

2. Bedingte Verteilungen von Antwortkategorien im Hinblick auf gegebene Merkmale sind unbekannt oder müssen aus nicht repräsentativen Stichproben geschätzt werden.

3. Zeitlich lokale Information ist möglicherweise irreführend, falsch oder nicht stationär, woraus eine Gradwanderung zwischen dem sofortigen Gebrauch von Daten einerseits und dem Warten auf weitere möglicherweise verfälschte Daten resultiert. Folglich müssen Aktualisierungen klein und widerrufbar sein.

Man kann mit Bestimmtheit sagen, daß die oben genannten Eigenschaften nur einen Aspekt des Lernproblems repräsentieren, welches von realen Organismen in realen Umweltsituationen bewältigt werden muß. Trotzdem wird hierdurch unterbewertet, aus welchem Grunde schwache Methoden, z. B. Methoden mit geringen Annahmen über die Umgebung, in welchen sie operieren, so kritisch sind.

Deshalb besteht ein zentrales Problem bei der Modellierung konnektionistischer Systeme in der Kontrolle über das Netzwerk und die Architekturressourcen während des Lernprozesses. Dies kann sehr schwer sein im Hinblick auf die oben erwähnten Arten von zu lernenden Daten. Grundsätzlich ist es möglich, diese Suchprobleme genau mit Hilfe der Ressourcen oder Freiheitsgrade im Lernmodell zu charakterisieren. Z. B. kann das Lernsystem aufgrund seiner Fähigkeit, Stimuluspunkte im Merkmalsraum zu trennen, klassifiziert werden, falls die Aufgabe des Lernsystems darin besteht, eine Klassifikation durchzuführen. In jedem falle kann man extrem komplizierte und unerwartete Netzwerke erhalten im Hinblick auf das allgemeine Netzwerk und die Struktur und im Hinblick auf die drei grundlegenden Eigenschaften realen Lernens, wie oben beschrieben. Nach der vorliegenden Erfindung spiegeln Gewichte eine grobe Prädiktionshistorie wieder, wie sie codiert wird durch eine Verteilung von Werten und parametrisiert wird durch den Mittelwert und die Standardabweichung dieser Gewichtsverteilungen. Aktualisierungen von Gewichten sind eine Funktion sowohl des Mittelwerts als auch der Standardabweichung einer jeden Verbindung im Netzwerk und variieren als eine Funktion des Fehlersignals (Stochastische Deltaregel). Folglich enthalten die Gewichte Information über ihre zentrale Tendenz und ihre Ungenauigkeit (uncertainty) der Vorhersage. Information dieser Art ist nützlich für die Bestimmung der Größe und der Knotenkomplexität des Netzwerks und das Wachstum neuer Knoten. Deshalb kann das vorliegende Netzwerk während einer Aufgabenlösung eine Zellteilung (Meiosis) vollziehen, indem es zwei Knoten hervorbringt, wo vorher ein überbewerteter Knoten (overtaxed node ) war nach Maßgabe seines Variationskoeffizienten. Es wird dann in einer Anzahl von Bench-Mark-Aufgaben gezeigt, daß Meiosis-Netzwerke minimale Architekturen finden können, eine reduzierte Komplexität der Berechnung (reduced computational complexity), und insgesamt die Effizienz der Wechselwirkung beim Lernen von Darstellungen steigern.

Zusammenfassende Darstellung der Erfindung

Ein Verfahren zur Steuerung der Architektur einer Netzwerkkonfiguration, dessen Netzwerk in einem lernenden System mit hoher Dimensionalität, a-priori Zwangsbedingungen und Nichtlinearitäten verwendet wird und welches Netzwerk eine Vielzahl von Knoten umfaßt, wobei Verbindungen innergalb des Netzwerks über Verbindungen zwischen diesen Knoten implementiert sind; dieses Verfahren umfaßt folgende Schritte: Die Messung der Prädiktionshistorie eines bestimmten Knotens, um zu bestimmen, ob der Prädiktionswert unterhalb eines erwünschten Werts ist; die Aufspaltung dieses Knotens, welcher einen Vorhersagewert über dem besagten erwünschten Wert besitzt unter Bereitstellung wenigstens zweier Ersatzknoten.

Kurzbeschreibung der Figuren

Figur 1 ist eine diagrammatische Ansicht, in der Gewichte als Stichprobenverteilungen dargestellt sind.
Figur 2 ist eine diagrammatische Ansicht, welche die Zellteilung in der Weise darstellt, wie sie im Netzwerk angewendet wird.
Figur 3 besteht aus zwei Diagrammen, welche die Zahl der verborgenen Einheiten bei Konvergenz zeigt.
Figur 4 ist eine Serie von vier Diagrammen, welche Konvergenzzeiten darstellen.
Figur 5 ist ein Plot, welches Daten aus der kernmagnetischen Resonanz zeigt.
Figur 6 besteht aus zwei Diagrammen, welche die Lernkurven und die Spaltungsrate zeigen.
Figur 7 ist ein Diagramm, welches die Transferrate als eine Funktion der Anzahl der verborgenen Einheiten zeigt.

Ausführliche Beschreibung der Erfindung

Wie oben bereits dargestellt, ist es möglich, die Suchprobleme genau nach den Ressourcen oder Freiheitsgraden des Lernmodells zu charakterisieren. Wenn die Aufgabe des Lernsystems darin besteht, eine Klassifikation auszuführen, kann das Lernsystem nach seiner Fähigkeit Stimuluspunkte im Merkmalsraum zu trennen, analysiert werden.

Trennungsfähigkeit: Netzwerkkapazität

Durch Verwendung eines Neurons vom Hyperebenen-Typ oder eines Neurons mit linearem fan-in, können wir die Netzwerk-inhärenten Freiheitsgrade von Einheiten mit Schwellwertentscheidung am Ausgang charakterisieren. Als Beispiel seien 4 Punkte mit linearen Grenzen, gut verteilt in einem zweidimensionalen Merkmalsraum betrachtet. Es gibt nun genau 14 linear separable Trennungen, welche aus diesen 4 Zielpunkten gebildet werden können. Auf der anderen Seite gibt es tatsächlich 16 ($2^4$) mögliche Trennungen von 4 Punkten in 2 Dimensionen, weshalb die Zahl der möglichen Trennungen oder willkürlichen Kategorien, welche linear implementierbar sind als Kapazität des linearen Netzwerks in k Dimensionen mit n Beispielen vorgestellt werden kann. Das allgemeine Maß für die Kategoriekapazität kann geschrieben werden als:

$$(1) \quad C(n, k) = 2 \sum_{j=0}^{k} \frac{(n-1)!}{(n-1-j)!\, j!} \; ; \; k+1 \text{ kleiner } n$$

Näheres hierzu in dem Artikel mit dem Titel "Geometrical and statistical properties of systems of linear inequalities with applications to pattern recognition", IEEE Trans. Elec. Computers, Vol. EC - 14,3, pp 236-334, 1965, von T. M. Cover.

Man bemerke das dramatische Wachstum in C als eine Funktion von k, der Zahl der Merkmalsdimensionen, z. B. gibt es 100.670 lineare Trennungen für 25 Stimuli in einem fünfdimensionalen Merkmalsraum. Unterbestimmtheit in dieser Sorte von linearen Netzwerken ist die Regel nicht die Ausnahme. Hierdurch wird die Suche (search process) und die Natur der Zwangsbedingungen über dem Suchprozeß kritisch im Auffinden von Lösungen, welche möglicherweise nicht nützlich in dem gegebenen Problembereich sind. Zur weiteren Information werden folgende Zitate angegeben:

Hanson, S. J. & Burr D. J. Minkowski
Back-propagation: LEARNING IN CONNECTIONIST MODELS WITH NON-EUCLIDEAN ERROR SIGNALS, Neural Information Processing Systems, American Institute of Physics, 1988.
Hanson, S. J. & Pratt, L.
A COMPARISON OF DIFFERENT BIASES FOR MINIMAL NETWORK CONSTRUCTION WITH BACK-PROPAGATION,
Advance in Neural Information Processing, D. Tauretzsky, Morgan Kaufmann, 1989.

Die stochasitsche Detaregel (SDR-rule)

Wirkliche neurale Systeme von Säugetieren beinhalten Rauschen. Antworten von derselben individuellen Einheit im isolierten Cortex aufgrund zyklisch wiederholter identischer Stimuli werden niemals in identischen Ausbrüchen (bursts) resultieren. Die Übertragung der Erregung durch neurale Netze in lebenden Systemen, ist grundlegend stochastischer Natur. Die typische Aktivierungsfunktion, wie sie in konnektionistischen Modellen verwendet wird, muß als ein Mittel über viele Intervalle angenommen werden, da ein beliebiger spezieller neuraler Pulszug (pulse train) ziemlich zufällig, tatsächlich poisson-verteilt erscheint. Hierzu lese man z. B. den Artikel mit dem Titel "The uncertain nervous system", London: Edward Arnold Ltd., 1968, von B. P. Burns. Weiterhin lese man einen Artikel mit dem Titel "Neural variability: Non-stationary response to identical visual stimuli", Brain Research, 79, p. 405-418, 1974, von G. T. Tomko und D. R. Crapper.

Hierdurch wird nahegelegt, daß ein bestimmtes neurales Signal in der Zeit besser durch eine Verteilung synaptischer Werte als durch einen einzelnen Wert modelliert werden kann. Weiterhin stellt diese Art der Darstellung einen natürlichen Weg zur Beeinflussung der synaptische Wirksamkeit in der Zeit dar. Um Rauschen adaptiv einzuführen, fordern wir, daß die synaptische Modifikation eine Funktion eines zufälligen Inkrements oder Dekrements ist, welches proportional zur Größe des momentanen Fehlersignals ist. Folglich wird das Gewichtsinkrement (weight delta) oder der Gradient selbst eine Zufallsvariable auf der Grundlage der Prädiktionsleistung. Deshalb kann das Rauschen, welches allgegenwärtig und anscheinend nutzlos innerhalb des Nervensystems erscheint, wenigstens in drei Vorteile verkehrt werden, indem es das System mit Mechanismen bereitstellt zur

(1) Unterhaltung mehrfacher Antworthypothesen bei gegebenem einfachem Input

(2) Unterhaltung einer groben Prädiktionshistorie, welche lokal, aktuell (recent) und billig ist, und deshalb punktuierte Kreditzuweisungsmöglichkeiten (punctate credit assignment opportunities) bereitstellt und schließlich

(3) zum Widerruf von Parametrisierungen, welche leicht zu erreichen, lokal stabil, aber entfernt von einer Lösung sind.

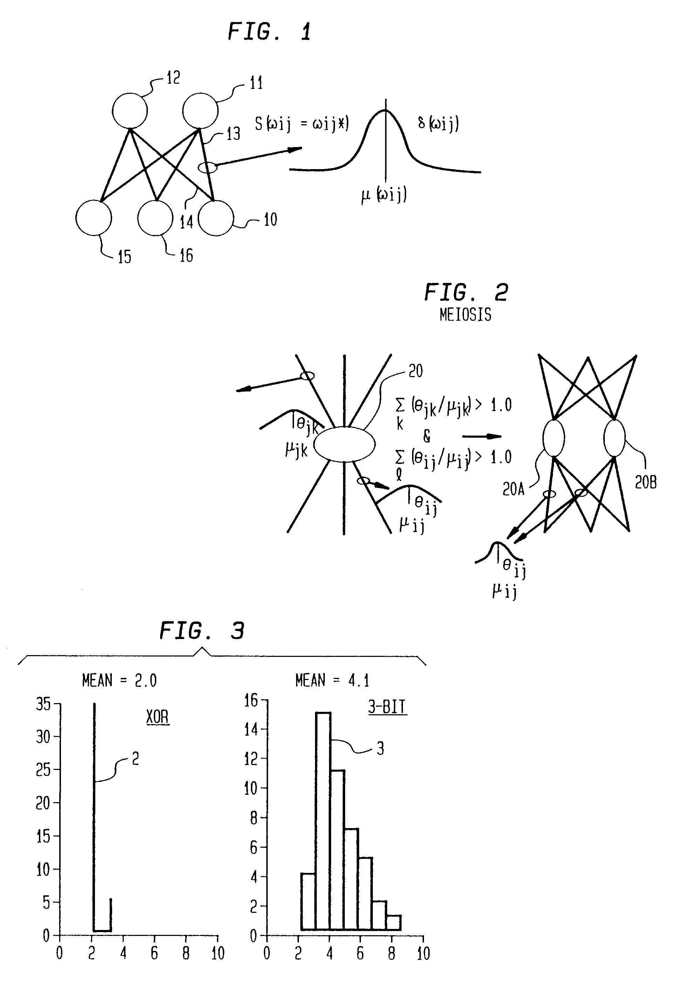

Mit Bezug auf Figur 1 sei bemerkt, daß wir uns dafür entscheiden, eine Verbindungsstärke durch eine Verteilung von Gewichten mit endlichem Mittelwert und Varianz darzustellen, obwohl es möglich ist, das vorliegende Prinzip in einer Anzahl verschiedener Weisen zu implementieren. In Fig. 1 wird ein Knoten 10 gezeigt, welcher mit einem Knoten 11 und einem Knoten 12 durch die Verbindungen 13 und 14 verbunden ist. Auf diese Weise wird jede Verbindung durch eine Verbindungsstärke $w_{ij}$ dargestellt. Wie gezeigt, sind die Knoten 15 und 16 ebenfalls mit den Knoten 11 und 12 verbunden.

Gewichte als Stichprobenverteilungen

Ein vorwärts Aktivierungs- oder Erkennungsdurchgang besteht in der Erhebung einer zufälligen Stichprobe eines Gewichts von der existierenden Verteilung durch Berechnung des Skalar-Produkts unter Erzeugung eines Ausgangs (output) für diesen Durchgang.

$$(2) \qquad x_i = \mathop{Z}_{j} \; w_{ij}^{\cdot} \; y_j$$

wobei die Stichprobe durch die Gleichung

$$(3) \quad S(w_{ij} = w_{ij}^{*}) = \mu_{w_{ij}} + \text{sigma}_{w_{ij}} \cdot \text{phi}(w_{ij}; 0; 1)$$

gefunden wird. Folglich ist

$$S(w_{ij} = w_{ij}^{*})$$

eine Zufallsvariable, welche aus einem endlichen Mittelwert

$$\mu_{w_{ij}}$$

und einer Standardabweichung

$$\mathrm{sigma}_{w_{ij}}$$

aufgebaut ist, basierend auf einer Normalverteilung (phi) mit verschwindendem Mittelwert und Standardabweichung Eins. Vorwärts Erkennungsdurchgänge sind deshalb eins-zuviele Abbildungen, wobei jede Stichprobe ein unterschiedliches Gewicht erzeugt in Abhängigkeit vom Mittelwert und von der Standardabweichung dieser bestimmten Verbindung, wobei das System stochastisch bleibt.

In der vorliegenden Implementierung gibt es tatsächlich drei getrennte Gleichungen für das Lernen. Der Mittelwert der Gewichtsverteilung wird als eine Funktion des üblichen Gradienten modifiziert auf der Grundlage des Fehlers, wobei allerdings zu bemerken ist, daß der zufällige Stichprobenpunkt für die Gradientenberechnung zurückbehalten wird und zur Aktualisierung des Mittelwertes der Verteilung für diese Synapse verwendet wird.

$$(4) \quad \mu_{w_{ij}} (n + 1) = \mathrm{alpha} \left( - \frac{\delta E}{\delta w_{ij}} \right) + \mu_{w_{ij}} (n)$$

In ähnlicher Weise wird die Standardabweichung der Gewichtsverteilung modifiziert als eine Funktion des Gradienten, wobei allerdings das Vorzeichen des Gradienten ignoriert wird und die Aktualisierung lediglich die Varianz vergrößern kann, wenn ein Fehler resultiert. Deshalb führen Fehler sofort zu einer Zunahme der Varianz dieser Synapse, zu welcher sie zugewiesen werden können.

$$(5) \quad \mathrm{sigma}_{w_{ij}} (n + 1) = \mathrm{zeta} \left| - \frac{\delta E}{\delta w_{ij}} \right| + \mathrm{sigma}_{w_{ij}} (n)$$

Eine dritte und letzte Lernregel bestimmt den Zerfall der Varianz der Synapsen im Netzwerk,

$$(6) \quad \mathrm{sigma}_{w_{ij}} (n + 1) = \mathrm{zeta} \cdot \mathrm{sigma}_{w_{ij}} (n) \; ; \; \mathrm{zeta} \quad \mathrm{kleiner} \; 1$$

Im Laufe der Entwicklung des Systems für zeta kleiner als Eins, garantiert die Letze der Gleichungen dieses Gleichungssystems, daß die Varianzen aller Synapsen sich dem Wert Null annähern und daß das System selbst deterministisch wird vor der Lösung. Für kleine Werte von zeta entwickelt sich das System sehr schnell in ein deterministisches, wogegen größere Werte von zeta dem System die Wiederkehr zu chaotischen Zuständen erlaubt, wie es während der Konvergenz gebraucht wird. Eine einfachere Implementierung dieses Algorithmus beinhaltet eben gerade den Gradienten selbst als eine Zufallsvariable (daher der Name "stochastische Delta-Regel"), aber dieser Ansatz vereinigt das Wachstum der Varianz der Gewichtsverteilung mit dem Zerfall und kompliziert die Implementierung parametrischer Studien.

Die stochastische Delta-Regel implementiert einen lokalen, adaptiven simulierten Temperungsvorgang (simulated annealing process), welcher mit verschiedenen Geschwindigkeiten (rates) in dem Netzwerk auftritt, in Abhängigkeit von der Prädiktionshistorie. Hierzu mehr in dem Artikel mit dem Titel "Optimization by simulated annealing", Science, 220, 671-680, 1983 von Kirkpatrick S., Gelatt C.D. & Veechi, M. Verschiedene Leistungstests (benchmark-tests) dieses grundlegenden Algorithmus werden in einem Artikel mit dem Titel "stochastic version of the delta rule", Physica D, 1990, von S. J. Hanson, diskutiert. Zellteilung

In der SDR-Regel, wie sie weiter oben diskutiert wurde, kann die Standardabweichung der Gewichtsverteilungen als ein Unsicherheitsmaß (uncertainty measure) betreffend den Gewichtswert und die Stärke angesehen werden. Folglich können Änderungen in der Standardabweichung als Maß für den "Prädiktionswert" der Verbindung angesehen werden. Verborgene Einheiten mit signifikanter Unsicherheit haben einen niedrigen Prädiktionswert und leisten eine schlechte Fehlerreduktion. Wenn die Unsicherheit einer verborgenen Einheit zunimmt über den kummulativen Gewichtswert oder das kummulative "Signal" an diese Einheit, dann kann die Komplexität der Architektur gegen die Unsicherheit pro Einheit abgewogen werden. Folglich spaltet sich die Einheit in zwei Einheiten auf, von denen jede die Hälfte der Architekturinformation kopiert.

Netzwerke werden mit zufälligen Mittelwerten und Varianzwerten initialisiert (wobei die Varianz anfänglich in dem Intervall (10, -10) gewählt wird.). Die Zahl der verborgenen Einheiten wurde bei allen Problemen mit Eins initialisiert. Die Grundsätze, nach der die Aufspaltungen geschehen, werden für alle Aufgaben so festgelegt, daß eine Aufspaltung geschieht, wenn sowohl die C.V. (Standardabweichung relativ zum Mittelwert) für den Eingang als auch den Ausgang dieser verborgenen Einheit 100% überschreitet, d. h., wenn die zusammengesetzte Varianz der Verbindungsstärken 100% des zusammengesetzten Mittelwerts der Verbindungsstärken beträgt:

$$\frac{\not{z}_i \; sigma_{ij}}{\not{z}_i \; \mu_{ij}} \; \text{größer } 1,0 \qquad und \frac{\not{z}_k \; sigma_{jk}}{\not{z}_k \; \mu_{jk}} \; \text{größer } 1,0$$

Im Hinblick auf Figur 2 wird die Zellteilung dann wie folgt durchgeführt:
Ein stochastischer Vorwärtsdurchlauf wird durchgeführt, wobei ein Ausgangssignal (output) produziert wird. Der Ausgang (output) wird verglichen mit Zielwerten (target), wodurch Fehler erzeugt werden, welche dann benutzt werden, um den Mittelwert und die Varianz des Gewichts zu aktualisieren. Die zusammengesetzen input- und output-Varianzen und Mittelwerte werden für alle verborgenen Einheiten berechnet. Für diese verborgenen Einheiten, deren zusammengesetzte C.V.s größer als 1.0 sind, findet eine Knotenaufspaltung statt; jedem neuen Knoten wird dabei die halbe Varianz zugewiesen mit einem verstreuten (jittered) Mittelwert, welcher um den alten Mittelwert zentriert ist. Dabei gibt es keine Anhaltekriterien (stopping criteria). Das Netzwerk hört auf, Knoten zu erzeugen auf der Grundlage des Prädiktionsfehlers und des Rauschniveaus (β, zeta).

In Figur 2 spaltet der prä-meiotische (pre-meiotic) Knoten 20 in die meiotischen (meiotic) Knoten 20A und 20B auf, welche die selben Netzwerkverbindungen haben, aber die halbe Varianz des prä-meiotischen Knotens 20. Die meiotischen Knoten 20A und 20B sind Kopien des Mittelwertes.

Beispiele

Paritäts-Benchmark: Ermittlung der richtigen Zahl der Einheiten.

Kleine Paritätsprobleme (Exklusiv-Oder und 3 Bit Parität) werden verwendet zur Untersuchung der Sensitivität der Rausch-Parameter auf die Knotenaufspaltung und um die Leistung des Verfahrens zu bewerten. Alle Läufe wurden dabei mit fester Lernrate (eta = 0.5) und fester Trägheit (momentum) (alpha = 0.75) durchgeführt. Niedrige Werte von zeta (zeta kleiner 0.7) ergeben minimale oder gar keine Knotenaufspaltungen, wogegen höhere Werte (oberhalb 0.99) anscheinend stetiges Knotenspalten prodizieren ohne Rücksicht auf den Problemtyp. Zeta war festgelegt (0,98) und Beta der Parameter Rauschen pro Schritt wurde zwischen den Werten 0.1 und 0.5 variiert. Die folgenden Läufe wurden nicht durch variierendes beta zwischen diesen beiden Werten beeinflußt.

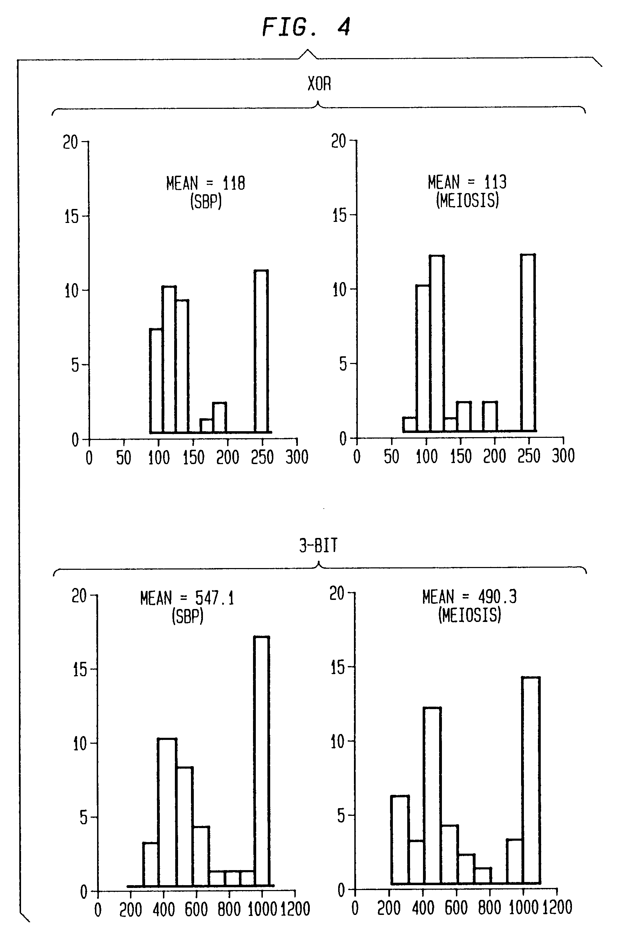

Figur 3 zeigt 50 Läufe des Exklusiv-Oder Problems und 50 Läufe des 3 Bit parity-Problems. Histogramme zeigen für das Exklusiv-Oder-Problem, daß fast alle Läufe (mehr als 95%) mit zwei verborgenen Einheiten endeten, wogegen im 3 Bit parity-Fall die meisten Läufe drei verborgene Einheiten ergaben, allerdings mit beträchtlich erhöhter Varianz, wobei einige mit zwei, andere wenige Läufe dagegen sogar mit 9 verborgenen Einheiten zu Ende gingen. Figur 4 zeigt Histogramme für die Konvergenzzeit, aus denen sich ein leichter Vorteil hinsichtlich der Konvergenz für die Zellteilungsnetzwerke sowohl für das Exklusiv-Oder-Problem als auch für das 3 Bit parity-Problem ergeben.

Blut NMR-Daten: nicht lineare Separabilität

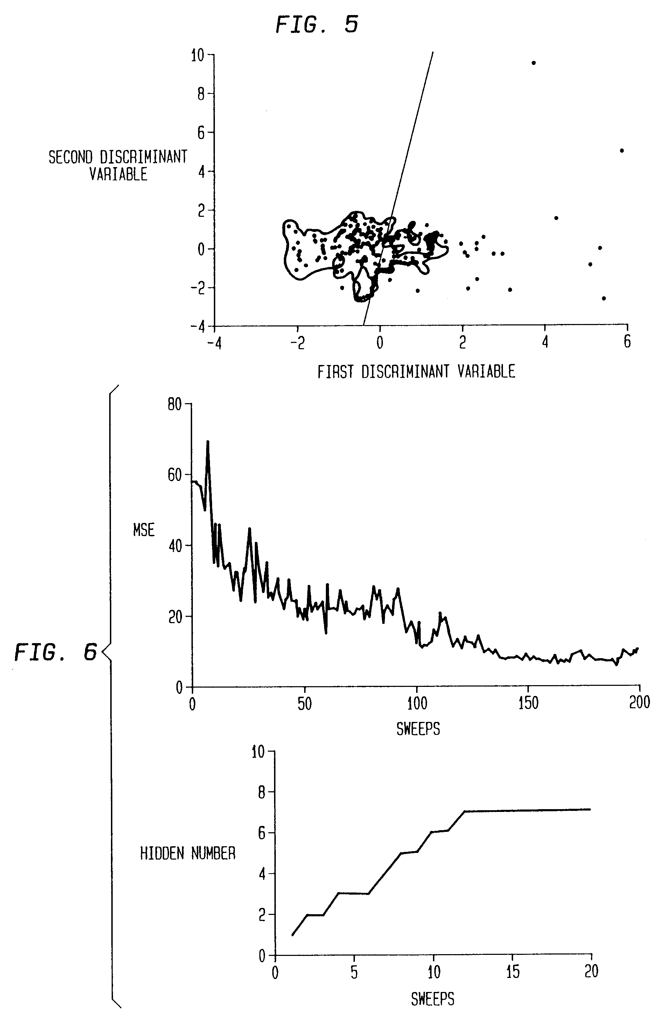

Die Daten in Figur 5 stammen von zehn verschiedenen stetigen Arten (continuous kinds) von Blutmessungen, einschließend den gesamten Lipidinhalt, Cholesterol (mg/dl), hochdichte Lipide (high density lipids), niedrigdichte Lipide (low density lipids), Triglyceride, etc. und auch einige NMR-Messungen. Die Subjekte waren vorher auf die Anwesenheit (C) oder Abwesenheit (N) einer Blutkrankheit untersucht worden.

Die Daten bestanden aus 238 Stichproben, 146 Ns und 982 Cs. In der benachbarten Figur ist die Anwort eines Perceptrons (lineare Diskriminantenanalyse) auf diese Daten dargestellt. Jeder ursprüngliche Datenpunkt wird in die ersten beiden Diskriminantenvariablen projiziert, wobei sich ca. 75% der Daten als linear separabel erweisen (k - k/2 jackknife Untersuchungen (jackknife tests) weisen auf Transferraten von ungefähr 52% hin). Auf der anderen Seite zeigt sich aber auch eine grob nicht-lineare einhüllende um eine Klasse von Subjekten (N), was auf eine möglicher Weise komplexe Entscheidungsregion für diese Daten hinweist.

Zellteilungslernkurven (meiosis learning curves)

Die Daten wurden in zwei Gruppen eingeteilt (118, 120) für Lern- und Transfertests. Lernkurven für sowohl das Zellteilungsnetzwerk als auch für die standard back-propagation werden in Figur 6 gezeigt. Hier wird auch die Spaltungsrate (splitting rate) für das Zellteilungsnetzwerk gezeigt, und man sieht, daß diese auf sieben verborgene Einheiten wächst und einfriert während der ersten zwanzig Duchgänge.

Transferrate

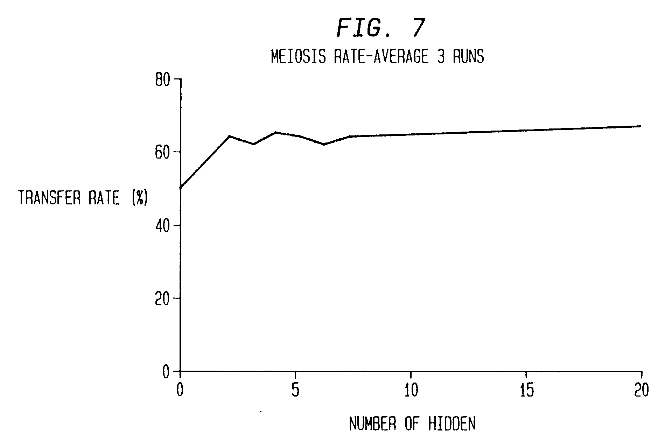

Auf diese Blutdaten wurde auch die Backpropagation angewendet mit 0 (Perceptron), 2, 3, 4, 5, 6, 7 und 20 verborgenen Einheiten. Gezeigt ist die median Transferrate von 3 Läufen für jede Größe des Netzwerks der verborgenen Einheiten. Die Transfersrate schien dabei in der Nähe von 65 % zu schweben, während die Zahl der verborgenen Einheiten sich 20 annäherte. Ein Zellteilungsnetzwerk wurde ebenfalls dreimal auf die Daten angewendet, wobei die Werte $\beta$ = 0.40 und zeta = 0.98 verwendet wurden. Die in Figur 7 gezeigte Transferrate war stets oberhalb von 70% bei der Zahl 7 von verborgenen Einheiten.

Die Schlüsseleigenschaft der vorliegenden Methode ist die Integration von Darstellungsaspekten, welche sensitiv sind für die Netzwerkprädiktion und dabei gleichzeitig die Architektur-Ressourcen des Netzwerks steuern. Folglich ist es mit Zellteilungsnetzwerken möglich, die Netzwerkkomplexität dynamisch und opportunistisch zu steuern und damit auch indirekt seine Lerneffizienz und seine Fähigkeit zur Verallgemeinerung (generalization capacity). Zellteilungsnetzwerke wurden definiert mit Hilfe lokaler Rauschinjektionen und rauschverbundener Lernregeln. Im Verlaufe des Lernens kann das Zellteiklungsnetzwerk die Prädiktionsgeschichte bestimmter Knoten messen und wenn diese für unzulänglich befunden wird, kann es den Knoten opportunistisch spalten, um die Ressourcen des Netzwerks zu steigern. Weitere Experimente sind nötig, um verschiedene Vorteile der Grundsätze für die Spaltung zu verstehen und deren Einflüsse auf Verallgemeinerung und Lerngeschwindigkeit.

**Patentansprüche**

**1.** Ein Verfahren zur Steuerung der Architektur einer Netzwerkkonfiguration, dessen Netzwerk in einem Lernsystem mit hoher Dimensionalität, a-priori Zwangsbedingungen und Nichtlinearitäten verwendet wird, und welches Netzwerk eine Vielzahl von Knoten enthält, wobei Verbindungen durch das Netzwerk über Verbindungen zwischen Knoten implementiert sind, mit folgenden Schritten:
- Messung der Prädiktionshistorie eines bestimmten Knotens, um zu bestimmen, ob der Prädiktionswert unterhalb eines erwünschten Werts liegt,
- Spaltung des besagten Knotens mit einem Prädiktionswert unterhalb des besagten erwünschten Wertes unter Bereitstellung wenigstens zweier Ersatzknoten.

**2.** Das Verfahren nach Anspruch 1, worin der Schritt der Messung der Prädiktionshistorie eines Knotens folgende Schritte enthält:
- Definition der Verbindungsstärken des besagten Knotens als eine Verteilung von Gewichten mit einem endlichen Mittelwert und einer endlichen Varianz,
- Berechnung eines Gewichtswerts, welcher abhängt von dem Mittelwert und der Standardabweichung einer bestimmten Verbindung zu diesen Knoten,
- Bestimmung, ob der besagte errechnete Gewichtswert einen Prädiktionswert unterhalb eines gegebenen akzeptablen Werts hat.

**3.** Das Verfahren nach Anspruch 2, wobei der besagte Schritt der Berechnung eines Gewichtswertes im Einklang mit der stochastischen Deltaregel durchgeführt wird.

**4.** Das Verfahren nach Anspruch 2, weiterhin enthaltend den Schritt der Aufnahme zufälliger Strichproben eines Gewichts von einer existierenden Verteilung, und anschließend die Berechnung des Skalar-Produkts, wobei eine Ausgangszufallsvariable erzeugt wird aus diesem errechneten Skalarprodukt, wobei die Standardabweichung der besagten Ausgangszufallsvariablen berechnet wird, um ein Maß des besagten Prädiktionswertes bereitzustellen.

**5.** Das Verfahren nach Anspruch 1, weiterhin umfassend den Schritt der Initialisierung des besagten Netzwerkes mit zufälligen Werten für Mittelwert und Varianz.

**6.** Das Verfahren nach Anspruch 1, in dem der Schritt der Spaltung implementiert ist, wenn die zusammengesetzte Varianz der Verbindungsstärken 100 % des zusammengesetzten Mittelwertes der Verbindungsstärken beträgt.

**7.** Das Verfahren nach Anspruch 6, wobei der Schritt der Spaltung weiterhin folgende Schritte umfaßt:
   - Durchführung eines stochastischen Forwärtsdurchlaufes, um einen Knotenausgang bereitzustellen,
   - Vergleich des besagten Ausgangs mit einem Zielwert unter Erzeugung von Fehlern,
   - Berechnung zusammengesetzter Eingangs- und Ausgangs-Varianzen und Mittelwerte für besagten Knoten,
   - Spaltung aller Knoten, bei denen die zusammengesetzten Eingangs- und Ausgangsvarianzen größer sind als Eins, wobei besagte zusammengesetzte Eingangs- und Ausgangsvarianzen größer als Eins einen Prädiktionswert und unterhalb eines erwünschten Wertes manifestieren.

**8.** Das Verfahren nach Anspruch 7 weiterhin umfassend den Schritt der Zuweisung einer halben Varianz und eines gestreuten Mittelwertes, zentriert um den alten Mittelwert, zu jedem neuen Knoten.

**9.** Ein Verfahren zur Steuerung der Architektur einer Netzwerkkonfiguration, dessen Netzwerk verwendet wird in einem Lernsystem mit hoher Dimensionalität, a-priori Zwangsbedingungen und Nichtlinearitäten und welches Netzwerk eine Vielzahl von Knoten enthält, wobei Verbindungen durch das Netzwerk mit Hilfe von Verbindungen zwischen Knoten implementiert sind mit folgenden Schritten:
   - Definition der Verbindungsstärken eines Knotens als eine Verteilung von Gewichten mit einem endlichem Mittelwert und einer endlichen Varianz,
   - Erhebung einer zufälligen Stichprobe eines Gewichts von einer existierenden definierten Verteilung,
   - Berechnung einer zufälligen Stichprobe zur Bereitstellung eines Gewichtswertes, der abhängt von dem Mittelwert und der Standardabweichung einer gegebenen Verbindung,
   - Bestimmung, ob der besagte berechnete Gewichtswert einen Prädiktionswert unterhalb eines gegebenen akzeptablen Wertes hat,
   - Aufspaltung wenigstens eines der besagten Knoten der besagten gegebenen Verbindung zur Bereitstellung wenigstens zweier Knoten, um besagten einen Knoten zu ersetzen,
   - Zuweisung einer neuen Varianz zu jedem der besagten bereitgestellten Knoten

## FIG. 1

## FIG. 2
### MEIOSIS

## FIG. 3

# FIG. 4

FIG. 5

SECOND DISCRIMINANT VARIABLE

FIRST DISCRIMINANT VARIABLE

FIG. 6

MSE

SWEEPS

HIDDEN NUMBER

SWEEPS

# *FIG. 7*

### MEIOSIS RATE-AVERAGE 3 RUNS